Europäisches Patentamt

European Patent Office

Office européen des brevets

(11) Veröffentlichungsnummer: **0 264 683**
A1

(12) **EUROPÄISCHE PATENTANMELDUNG**

(21) Anmeldenummer: 87114359.0

(22) Anmeldetag: 01.10.87

(51) Int. Cl.⁴: **B65G 37/00** , B65G 21/22 ,
B23P 19/04

(30) Priorität: 22.10.86 DE 3635879

(43) Veröffentlichungstag der Anmeldung:
27.04.88 Patentblatt 88/17

(84) Benannte Vertragsstaaten:
AT BE CH DE ES FR GB GR IT LI LU NL SE

(71) Anmelder: Kochanneck, Uwe
Heidkopf 10 Postfach 1163
D-4600 Dortmund 1(DE)

(72) Erfinder: Kochanneck, Uwe
Heidkopf 10 Postfach 1163
D-4600 Dortmund 1(DE)

(54) Arbeitsplatz.

(57) Bei einem Arbeitsplatz mit Laufschienen und verschieb-und drehbaren Arbeitsplatten, soll für Veränderungen und individuelle Einstellung der Daraufstehenden Arbeitsgeräte, insbesondere bei Computer-und Bildschirmnutzung, durch Verwendung von einer minimalen Anzahl immer baugleicher Elemente, die Umbauflexibilität erhöht und die Erweiterungsmöglichkeit erleichtert werden. Zur Lösung dieser Aufgabe wird gemäss der Erfindung vorgesehen, dass Laufschienen (1) an der Unterseite gelenkig mit Verbindungslaschen (2) aneinandergekettet sind und in den Laufschienen (1) Laufrollen (3) gleiten, die im Gelenkpunktabstand der Verbindungslaschen (2) gesetzt sind und mit daraufstehenden Arbeitsplatten (4) oder Drehverbindungen (6) verbunden sind. Die Laufschienen (1) erhalten innenversenkte Rasterbohrungen und werden in gleicher Bauart für die horizontale Laufbahn und vertikal als Laufbahnstützen eingesetzt. Die Arbeitsplatten (4) werden über Eckverbinder (5) zu Mehrfackplatten verbunden.

Hierdurch ist es möglich Einzelarbeitsplätze zu erstellen, deren Laufschienen (1) an der Verbindungslinie mit den Verbindungslaschen (2) horizontal zur Stabilisierung ausschwenkbar sind und zu Mehrfacharbeitsplätzen, über die Verkettung von zusätzlichen Laufschienen (1) und Verbindungslaschen (2), zu erweitern.

FIG. 2

## Arbeitsplatz

Die Erfindung betrifft einen Arbeitsplatz mit Laufschienen und verschieb-und drehbaren Arbeitsplatten.

Ein derartiger Arbeitsplatz ist bekannt. Bei diesem Arbeitsplatz werden auf festen Rahmenunterkonstruktionen die Arbeitsplatten aufgeschraubt und auf diesen Arbeitsplatten werden Drehscheiben befestigt. Unter den Arbeitsplatten ist dann - schubladenförmig eine weitere Arbeitsplatte zur Bedienungsperson hin ausziehbar. Dieser Arbeitsplatz ist verhältnismässig unflexibel bei Umbauten und Erweiterungen. Für jede Bedienungsperson muss eine neue komplette Einheit aufgebaut werden, wobei die fest verschraubten oder verschweissten Baugruppen der Rahmenstützkonstruktion und die darauf befestigten Arbeitseinheiten mit einer relativ kostenträchtigen Vielfalt von insich unterschiedlichen Bauelementen, für Veränderungen am Arbeitsplatz und individuelle Einstellung der darauf stehenden Arbeitsgeräte, insbesondere bei Computer-und Bildschirmnutzungen, nur bedingt geeignet sind.

Der Erfindung liegt die Aufgabe zugrunde einen Arbeitsplatz der eingangs angegebenen Art so auszugestalten, dass die Umbauflexibilität erhöht und Erweiterungen leicht möglich sind, wobei der Benutzerkomfort des Arbeitsplatzes noch erhöht werden soll und die Vielfalt der Bauelemente auf ein Minimum an immer gleichen Bauelementen zurückgeführt werden soll.

Zur Lösung dieser Aufgabe ist gemäss der Erfindung vorgesehen, dass Laufschienen an der Unterseite mit Verbindungungslaschen gelenkig aneinandergekettet sind und in den Laufschienen Laufrollen gleiten, die im Gelenkpunktabstand der Verbindungslaschen gesetzt und mit daraufstehenden Arbeitsplatten verbunden sind.

Hierdurch ist gegenüber dem nachstkommenden Stand der Technik erreicht, dass über das Verketten der Laufschienen in Gelenkpunkten und in den Laufschienen gleitenden Laufrollen, die im Gelenkpunktabstand der Verbindunglaschen gesetzt sind und Arbeitsplatten aufnehmen, die Umbauflexibilität erhöht und Erweiterungen erleichtert werden wobei die Vielfalt der für den Umbau und Erweiterungen benötigten Bauelemente noch reduziert wird und durch die gleichzeitig vorgesehene, freie horizontale Verschiebbarkeit der Arbeitsplatten, die individuelle Anpassung an den benötigten Freiraum und die Bedienungsreichweiten der Benutzer, verbessert wird.

Die Ausgestaltungen der Erfindung sind in den Unteransprüchen genannt.

Die Ausgestaltung gemäss Anspruch 4 ergibt, dass die Erfindung bei Erweiterung der Arbeitsplatten die auf den sie tragenden Laufrollen befestigt sind, eine Verkettung der Arbeitsplatten über Eckverbinder an der Eckpunkten der Arbeitsplatten erfolgt und die Arbeitsplatten sowohl als Arbeitsplatten mit den Laufrollen im Gelenkpunktabstand verbunden, in die horizontalen Laufschienen eingebracht werden und auch in die vertikalen Laufschienen als Abdeckplatten und Reserve-Arbeitsplatten für schnelle Auflageerweiterungen im Horizontalbereich.

Es folgt die Beschreibung von 4 Ausführungsbeispielen gemäss der Erfindung, die in den Figuren dargestellt sind. Es zeigt

Fig. 1 die Draufsicht auf einen Mehrfacharbeitsplatz,

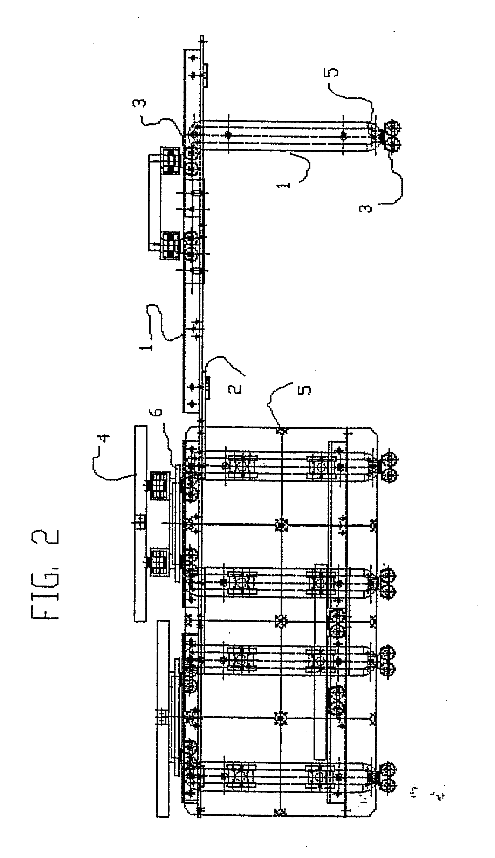

Fig. 2 die Vorderansicht eines Mehrfacharbeitsplatzes gemäss Fig. 1,

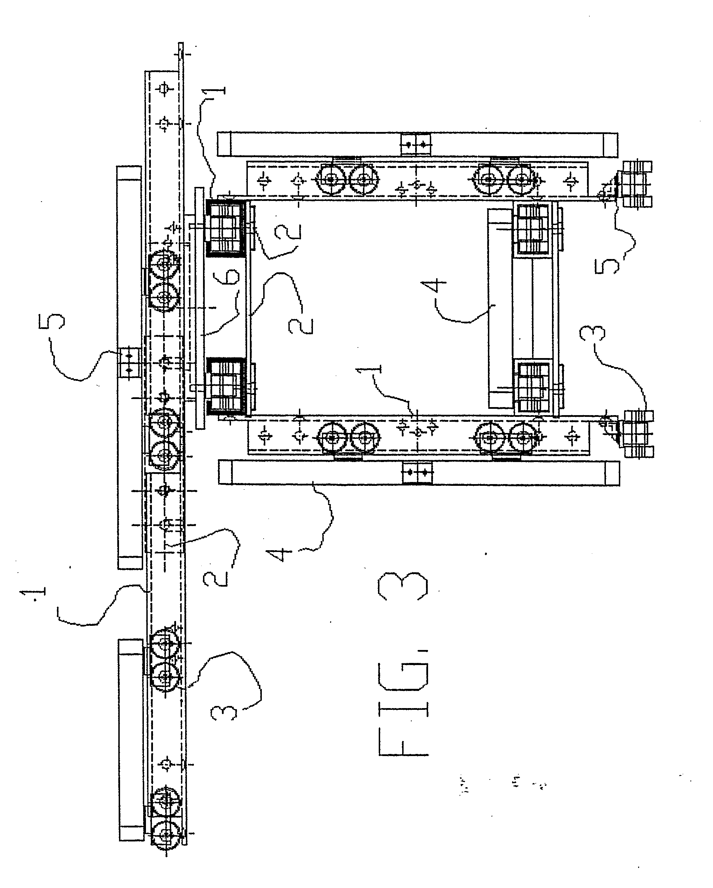

Fig. 3 einen Schnitt in der Linie I-I durch die Draufsicht eines Mehrfacharbeitsplatzes gemäss der Fig. 1,

Fig. 4 die Draufsicht auf einen Einzelarbeitsplatz, mit Laufschienen in 90 Grad Stellung zur Aufnahme von schwerem Arbeitsgerät,

Fig. 5 die Draufsicht auf einen Mehrfacharbeitsplatz mit zentralem Laufschienenknoten,

Fig. 6 die Draufsicht auf einen Mehrfacharbeitsplatz mit Kreuzungsbereich,

Fig.1,2 und 3,

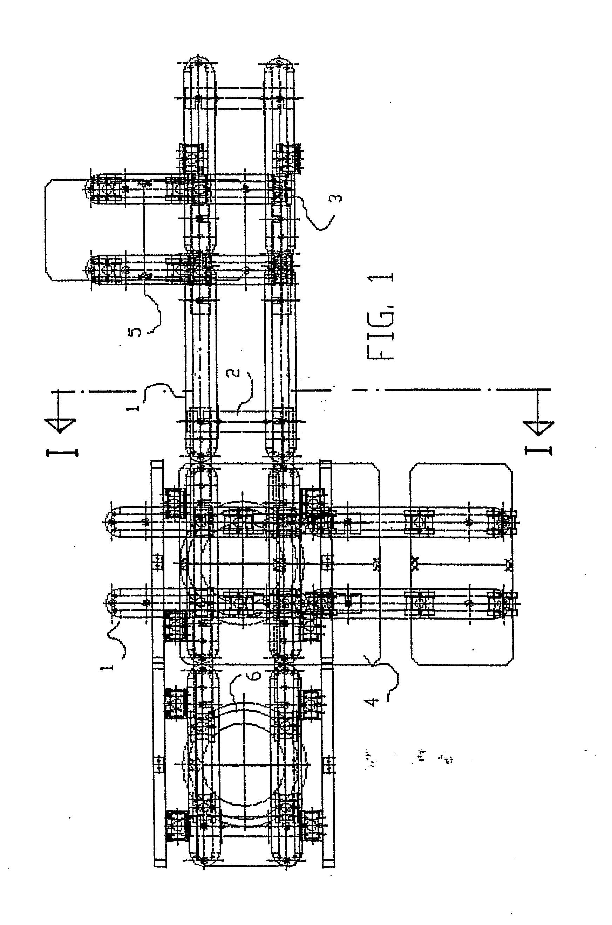

Der Arbeitsplatz wird aus immer baugleichen Laufschienen 1 gebildet, die im Laufschieneninnenprofil versenkte Bohrungen, mit einsetzbaren Gelenkbolzen,seitlich und in der Laufschienenmitte in festen Rasterabständen haben. Die Laufschienen sind an ihren Enden leicht abgerundet. Unter die Laufschienen 1 werden im Endbereich immer baugleiche Verbindungslaschen 2 in der Laufschienenlängsrichtung und quer zur Laufschiene 1 auf die eingesetzten Gelenkbolzen geschoben. Es werden so Laufschienenpaare gebildet, die zu einem Rahmen verbunden sind, der jedoch im Gelenkpunkt zwischen Laufschienenunterseite und Verbindungslasche 2 drehbar und jederzeit horizontal neu einstellbar ist. Die Laufschienen 1 stossen bei der Aneinanderreihung wie in Fig. 1 dargestellt, direkt an den Enden zusammen und bilden so eine durchgehende freie Lauffläche. Die Laufschienen 1 werden in gleicher Bauart nicht nur horizontal, sondern auch vertikal angeordnet und werden über entsprechende Rasterbohrungen im Bereich der Laufschienendrundungen direkt an die Seiten der horizontal verlaufenden Laufschienen 1 als Stützen angeordnet. Die Seitenbohrungen der Laufschienen 1 liegen auf einer Masslinie zu den Rastermassen für die Verbindungslaschen 2 in den Laufflächen der Laufschienen 1 und haben zusätzlich noch eine Bohrung seitlich, in der Mitte der Laufschiene 1, so dass die vertikale Anordnung mittig oder am Ende erfolgen kann, wobei die Lauffläche nach innen oder nach aussen, in Richtung zur Benutzerseite, gedreht werden kann. In dem Rasterabstand der Gelenkbolzen für die Aufnahme der Verbindungslaschen 2 werden in die Laufschienen 1 Laufrollen 3 gesetzt und in diesem Rasterabstand mit Arbeitsplatten 4 verbunden. Die Laufrollen 3 sind in der Befestigungsachse unter den Arbeitsplatten 4 frei drehbar und lassen sich je nach horizontaler Richtungs-Anordnung der Laufschienen 1 in Laufschienenrichtung verschieben. Die Arbeitsplatten 4 erhalten quadratischen Zuschnitt dessen Kantenlänge genau der halben Länge der Laufschienen 1 entspricht. Ausserdem werden die Arbeitsplatten 4 an den Ecken auf 45 Grad abgeschrägt und mit Bohrungen für die Aufnahme von dreieckförmigen Eckverbindern 5 versehen. Bei der Verbindung von 2 Arbeitsplatten 4 werden diese zusammengelegt und in die sich dann bildenden Dreieckfreiräume an den Aussenkanten, werden die Eckverbinder 5 eingesetzt und über die Bohrungen an den 45 Grad abgeschrägten Ecken der Arbeitsplatten 4, mit einsteckbaren Drehbolzen verbunden. Je zwei derartig verbundener Arbeitsplatten 4 werden nach dieser Vorgehensweise zusammengelegt und zu Mehrfachplatten zusammengestellt, wenn der Benutzer entsprechend grosse Arbeitsplatten benötigt. Bei einer Zusammenstellung von je vier Arbeitsplatten 4 zu einem derartigen Viererblock werden wahlweise die Eckverbinder 5 in der Mitte nicht gesetzt, so dass ein Vierkantloch in Plattenmitte des Viererblocks entsteht durch das Strom- oder andere Versorgungsleitungen zu den auf dem Viererblock stehenden Arbeitsgeräten geführt werden können, oder in das ein Stromschleifringkörper, oder eine einfache Steckdose eingesetzt wird. Die Unterseite der Arbeitsplatte 4 wird mit Mehrfach-Rasterbohrungen versehen, deren Abstandsmass den gesetzten Abstandsmassen der Laufrollen 4 entsprechen, die sich ihrerseits an den Rastermassen von Gelenkpunkt zu Gelenkpunkt, der Verbindungslaschen 2 orientieren. Es werden jeweils vier Laufrollen 3 für die Anordnung von einer Arbeitsplatte 4, für zwei miteinander verbundene Arbeitsplatten 4 oder für vier miteinander verbunde Arbeitsplatten 4 eingesetzt. Die Laufrollen 3 werden entsprechend der gewählten Kombination in die bereits vorgesehenen Rasterbohrungen eingedrückt bzw. umgesetzt.Es ist ausserdem vorgesehen, in die Rasterbohrungen der Arbeitsplatte 4 für die Laufrollen 3, wahlweise Befestigungsbolzen eines Drehkranzes 6 einzudrücken, der dann an seiner Unterseite die Laufrollen 3 im Rasterabstand der Verbindungslaschen 2 aufnimmt, so dass die Arbeitsplatte auf dem Drehkranz 6, Als Mehrfachplatte verbunden oder als Einzelplatte, drehbar und in den Laufschienen 1 verschiebbar eingesetzt werden kann. Es ist zusätzlich vorgesehen, dass der Drehkranz 6 ein Laufschienenpaar 1 im Rasterabstand der Verbindungslaschen 2 an den Befestigungsbolzen aufnimmt und dann in diesen Laufschienen 1 die Laufrollen 3 mit der Arbeitsplatte 4 aufnimmt, so dass diese Arbeitsplatte 4 in Richtung zum Benutzer zusätzlich verschiebbar ist. Die Laufschienen 1 die auf den Drehkränzen 6 aufgesteckt sind, werden wahlweise mit Verbindungslaschen 2 verlängert und es werden gegen Durchbiegung der Laufschienen 1 an der Verbindungslinie zwischen den Laufschienen 1, auch seitlich an den Laufschienen 1 Verbindungslaschen 2 aufgesteckt. Es ist ausserdem möglich, dass die Laufschienen 1 an Ihrer Unterseite statt des Drehkranzes 6 die eindrückbaren Stifte der Laufrollen 3 selbst aufnehmen und quer zu den darunterliegenden Laufschienen 1 verschiebbar sind. Die Arbeitsplatten 4 sind nun durch die Einhaltung des für alle Laufrolleneinsätze bestimmenden Rastermasses der Verbindungslaschen 2, in die einzelnen Laufschienen 1, ob quer zum Benutzer oder längs angeordnet, einsetzbar und verschiebbar. Unter den Laufschienen 1 mit verschiebbarem Drehkranz 6 und Arbeitsplatte 4, kann wahlweise eine zweite Bahn mit Laufschienen 1 eingerichtet werden. Hierzu werden die Laufschienen 1, die vertikal angeordnet sind mit der offenen Seite nach aussen angesetzt und in die Rasterbohrung die ansonsten für die Verbindungslaschen 2 vorgesehen sind, werden die Laufschienen 1 der zweiten Bahn, seitlich eingehängt. In diesen Laufschienen 1 ist nunmehr die Arbeitsplatte 4 ebenfalls verschiebbar. Gleichzeitig werden wahlweise die Arbeitsplatten 4 in die vertikal angeordneten Laufschienen 1 eingeschoben und dienen als Verkleidung des Arbeitsplatzes und als Reserveplatten für Erweiterung in der ersten oder zweiten Laufschienenbahn. Die vertikal angeordneten Laufschienen 1 werden auf Laufrollen 3 gestellt, die mit Eckverbindern 5 an den Laufschienenenden befestigt werden. Die Laufrollen 3 sind baugleich den Laufrollen 3 in den Laufschienen 1 und die Eckverbinder 5 sind baugleich den Eckverbindern 5 der Arbeitsplatten 4.

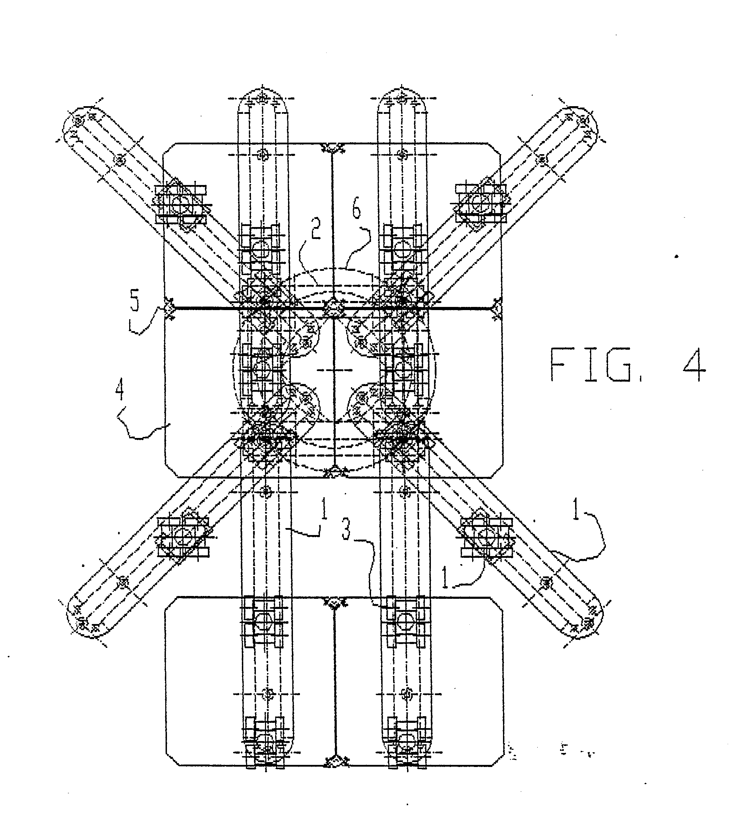

Bei dem Einzelarbeitsplatz gemäss Fig. 4 wurden die Laufschienen 1 an der Verbindungslinie mit den Verbindungslaschen 2 eingedreht und in 45 Grad ausgeschwenkt. Die Laufschienen 1 nehmen einen Drehkranz 6 mit Laufrollen 3 auf, der auf seiner Oberseite ein Laufschienenpaar 1 aufnimmt, das über ein weiteres Laufschienenpaar mit seitlicher Stabilisierung durch Verbindungslaschen 2 zum Benutzer hin verlängert wurde. Es sind in diesem obersten Laufschienenpaar die Arbeitsplatten 4 verschiebbar. Es ist ein Zweier-und ein Viererblock eingesetzt. Durch das Einschwenken der Laufschienen 1 in 45 Grad ist das Verschieben des Drehkranzes 6 in den Laufschienen 1 blockiert und durch das Einhängen der vertikalen Laufschienen 1 in der Mitte der horizontalen Laufschienen 1, ist diese Arbeitsplatzaufstellung für Einzelarbeitsplätze mit schweren Arbeitsgeräten vorgesehen. Bei einer Erweiterung zu Mehrfacharbeitsplätzen werden die Laufschienen 1 auf einer Seite des Einzelarbeitsplatzes auf 90 Gradstellung zurückgeschwenkt und eine Seite verbleibt zwecks Stabilisierung des neuen Mehrfacharbeitsplatzes in 45 Gradstellung, oder aber beide Seiten werden in 90 Gradstellung zurückgeschwenkt, zur freien Verschiebbarkeit der Arbeitsplatten 1 in Richtung der Laufschienen 1.

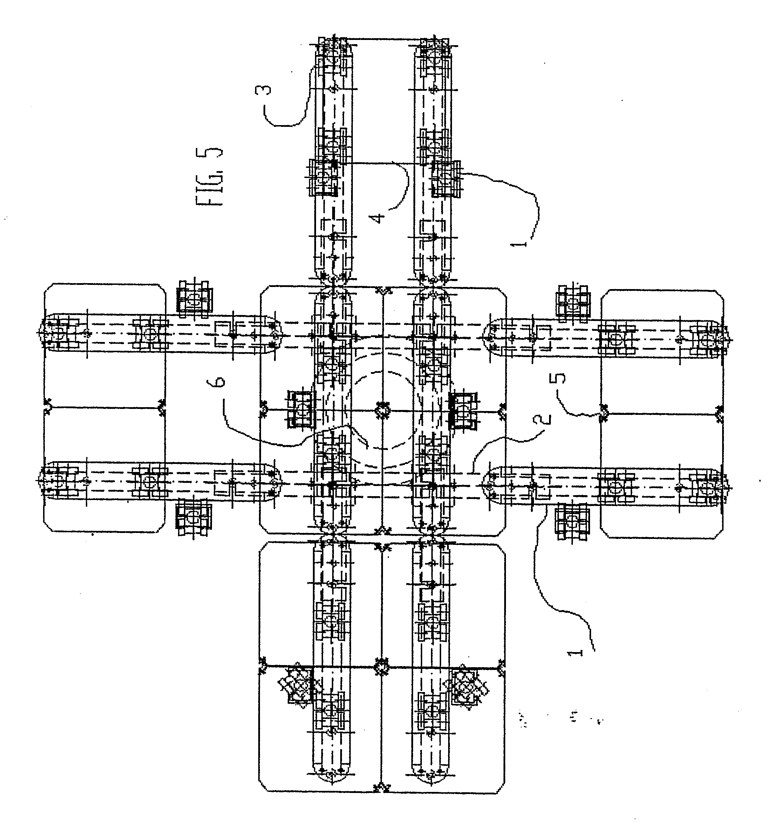

Bei dem Mehrfacharbeitsplatz mit zentralem Laufschienenknoten gemäss Fig. 5, sind zwei Laufschienen 1 mit den Verbindungslaschen 2 in den Gelenkpunkten zu einem Laufschienenpaar zusammengefasst und nehmen einen Drehkranz 6 auf Laufrollen 3 mit vier Arbeitsplatten 4 auf. Diese Einheit bildet den Mittelpunkt für die Anordnung von Laufschienen 1 mit Verbindungslaschen 2 um den Knotenpunkt herum.

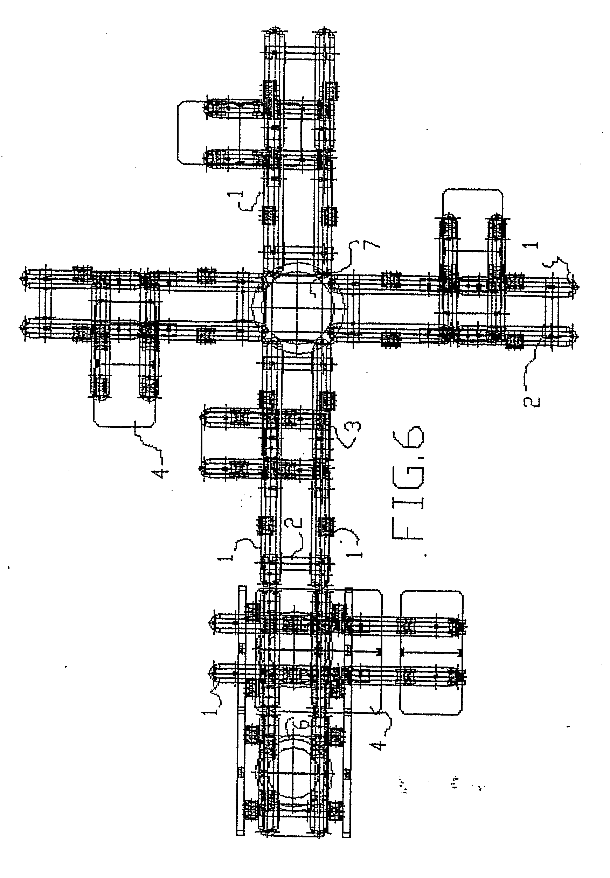

Bei dem Mehrfacharbeitsplatz mit Kreuzungsbereich gemäss der Fig.6 wird über den Kreuzungspunkt 7 die freie Einfahrt von einer horizontalen Richtung in die Quer dazu liegende Laufschienenrichtung der Laufrollen 3 mit darauf aufstehenden Arbeitseinheiten ermöglicht. Diese langgestreckte Mehrfacharbeitsplatzanordnung beinhaltet den teilweisen elektromotorischen Antrieb der Laufrollen 3 mit den Arbeitsplatten 4, in der oberen Bahn und der 2. Bahn unter der oberen Laufschienenbahn. Entsprechend befindet sich im Kreuzungspunkt 7, eine elektromotorisch betätigte Drehscheibe, die für Fahrtrichtungsumsetzung der Arbeitseinheiten im Kreuzungsbereich sorgt.

## Ansprüche

1. Arbeitsplatz mit Laufschienen und verschieb- und drehbaren Arbeitsplatten dadurch gekennzeichnet, dass Laufschienen 1 an der Unterseite gelenkig mit Verbindungslaschen 2 aneinandergekettet sind und in den Laufschienen 1 Laufrollen 3 gleiten, die im Gelenkpunktabstand der Verbindungslaschen 2 gesetzt sind und mit daraufstehenden Arbeitsplatten 4 verbunden sind.

2. Arbeitsplatz nach Anspruch 1 dadurch gekennzeichnet, dass die Laufschienen 1 an den Enden abgerundet werden und innenversenkte Rasterbohrungen für einseztbare Gelenkbolzen in der Laufschienenbahn und den Laufschienenseiten erhalten und in gleicher Bauart für die horizontale Laufbahn und vertikal als Laufbahnstützen eingesetzt werden.

3. Arbeitsplatz nach Anspruch 1 oder 2 dadurch gekennzeichnet, dass zwischen den Laufrollen 3 und den Arbeitsplatten 4 im Gelenkpunktabstand der Verbindungslaschen 2, Drehverbindungen 6 oder quer zur Laufrichtung der Laufschienen 1 aufgesetzte Laufschienenpaare eingesetzt werden die Ihrerseits mit Verbindungslaschen 2 verkettet und bei Verlängerungen seitenversteift sind und in denen Arbeitsplatten 4 mit Laufrollen 3 verschiebbar angeordnet sind.

4. Arbeitsplatz nach Anspruch 1, 2 oder 3 dadurch gekennzeichnet, dass die Arbeitsplatten 4 an der Unterseite Mehrfach-Rasterbohrungen im Gelenkpunktabstand der Verbindungslaschen 2 für das Umstecken der Laufrollen 2 erhalten und an Eckpunkten die um 45 Grad abgeschrägt sind, mit Eckverbindern 5 zu Mehrfachplatten verbunden werden und mit den Laufrollen 2 in die horizontalen Laufschienen 1 als Arbeitsplatten und die vertikalen Laufschienen 1 als Abdeckplatten und Reserve-Arbeitsplatten eingeschoben werden.

5. Arbeitsplatz nach Anspruch 1, 2, 3 oder 4 dadurch gekennzeichnet, das die vertikalen Laufschienen 1 über die baugleichen Eckverbinder 5 der Arbeitsplatten 4 mit den baugleichen Laufrollen 3 der horizontalen Laufschienen 1, an einem abgerundeten Ende verbunden sind und der gesamte Arbeitsplatz auf den Laufrollen 3 verfahren werden kann.

6. Arbeitsplatz nach Anspruch 1, 2, 3, 4 oder 5 dadurch gekennzeichnet, dass unter den Laufschienen 1 des horizontalen Arbeitsplattenbereichs, eine weitere Laufschienenbahn eingerichtet wird, die an den vertikalen Laufschienen 1 in den Rasterbohrungen der Verbindungslaschen 2 befestigt werden und mit den Verbindungslaschen 2 wie die obere Laufschienenbahn verkettet werden und in denen die Arbeitsplatten 4 mit Laufrollen 3 manuell oder elektromotorisch verschoben werden.

7. Arbeitsplatz nach Anspruch 1 oder 6 dadurch gekennzeichnet, dass Mehrfacharbeitsplätze in Kreuzungspunkten 7 miteinander verbunden werden und in den Kreuzungspunkten 7 manuell oder elektromotorisch betriebene Drehscheiben 7 eingesetzt werden und die Laufrollen 3 mit den Arbeitsplatten 4 teilweise elektromotorisch angetrieben, in die Kreuzungsrichtungen eingeschoben werden.

FIG. 1

# FIG. 2

FIG. 3

0 264 683

FIG. 4

FIG. 5

FIG.6

| Europäisches Patentamt | **EUROPÄISCHER RECHERCHENBERICHT** | Nummer der Anmeldung |

## EINSCHLÄGIGE DOKUMENTE

EP 87114359.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | DE - A1 - 3 502 820 (STICHT)<br>* Fig. 2 *<br>-- | 1 | B 65 G 37/00<br>B 65 G 21/22<br>B 23 P 19/04 |
| A | US - A - 4 479 572 (MERZ)<br>* Fig. 7 *<br>-- | 1 | |
| A | GB - A - 2 089 753 (INVENTIO)<br>* Fig. 2 *<br>-- | 1 | |
| P,A | GB - A - 2 182 011 (TSUBAKIMOTO)<br>* Fig. 11 *<br>---- | 1 | |

|  | RECHERCHIERTE SACHGEBIETE (Int. Cl. 4) |
|---|---|
|  | B 23 P<br>B 25 H<br>B 65 G |

Der vorliegende Recherchenbericht wurde für alle Patentansprüche erstellt.

| Recherchenort | Abschlußdatum der Recherche | Prüfer |
|---|---|---|
| WIEN | 19-01-1988 | BAUMGARTNER |